# EUROPÄISCHE PATENTANMELDUNG

(11) **EP 2 919 380 A1**
(43) Veröffentlichungstag der Anmeldung: **16.09.2015**
(21) Anmeldenummer: 15151207.6
(22) Anmeldetag: 15.01.2015
(51) Int. Cl.: H02P 9/00, H02P 25/22, G05D 3/20

(54) **Konvertersystem und Verfahren zum Konvertieren von Wechselstrom**

(30) Priorität: 14.03.2014 DE 102014204802
(71) Anmelder: Siemens Aktiengesellschaft, 80333 München (DE)
(72) Erfinder: Wu, Lijian, 7430 Ikast (DK)

(57) **Zusammenfassung**

Beschrieben ist ein Konvertersystem (101) zum Konvertieren von Wechselstrom (113,115,117,121,123,125) variabler Frequenz in Wechselstrom (129,131,133,135,137,139) konstanter Frequenz, wobei das Konvertersystem aufweist: einen ersten Konverter (119), welcher mit einem ersten Satz (109) von Windungen eines Generators (107) elektrisch verbindbar ist; und zumindest einen zweiten Konverter (127), welcher mit einem zweiten Satz (111) von Windungen des Generators (107) elektrisch verbindbar ist, wobei der erste Konverter in einem ersten Betriebsmodus ausgebildet ist, eine erste geschätzte Rotorposition (145) des Generators (107) zu bestimmen, und Ansteuerungen von in dem ersten Konverter umfassten ersten Leistungstransistoren (153) zum Konvertieren des Wechselstroms basierend auf der ersten geschätzten Rotorposition (145) vorzunehmen, wobei der zweite Konverter (127) in einem ersten Betriebsmodus ausgebildet ist, die erste geschätzte Rotorposition (145) des Generators (107) von dem ersten Konverter (119) zu empfangen, und Ansteuerungen von in dem zweiten Konverter (127) umfassten zweiten Leistungstransistoren (163) zum Konvertieren des Wechselstroms basierend auf der ersten geschätzten Rotorposition (145) vorzunehmen.

## Beschreibung

### Gebiet der Erfindung

Die vorliegende Erfindung betrifft ein Konvertersystem und ein Verfahren zum Konvertieren von Wechselstrom variabler Frequenz in Wechselstrom konstanter Frequenz, welches für einen elektrischen Generator mit mehreren Sätzen von elektrisch isolierten Windungen verwendet werden kann.

### Hintergrund

In einer Windturbine kann ein Generator durch einen rotierenden Schaft angetrieben werden, an dem mehrere Schaufeln bzw. Rotorblätter angebracht sind. In Abhängigkeit von einer Umdrehungsfrequenz des Rotors, welcher den Generator antreibt, kann der Generator Wechselstrom variierender Frequenz ausgeben. Um elektrische Energie in ein Versorgungsnetz einspeisen zu können, welches Verbrauchern die elektrische Energie mit einer vorgegebenen Wechselfrequenz, wie etwa 50 Hz oder 60 Hz, zur Verfügung stellt, muss die Energie bzw. Leistung variabler Frequenz, welche von dem Generator geliefert wird, in Energie bzw. Leistung bzw. Strom bzw. Spannung fester Frequenz konvertiert werden.

Zu diesem Zweck verwendet der Stand der Technik einen Konverter, welcher einen generatorseitigen Teil, einen Gleichstromteil und einen versorgungsnetzseitigen Teil aufweist. In dem generatorseitigen Teil des Konverters wird der Energiestrom variabler Frequenz in einen Gleichstrom verwandelt und in dem Gleichstromteil des Konverters zusätzlich geglättet. In dem versorgungsnetzseitigen Teil wird der Gleichstrom in einen Wechselstrom fester (vorgegebener) Frequenz umgewandelt. Dabei kann der generatorseitige Teil sowie auch der versorgungsnetzseitige Teil des Konverters jeweils eine Reihe von Leistungstransistoren aufweisen, welche durch Pulsweitemodulationssignale an ihren jeweiligen Gates angesteuert werden, um die Umwandlung in Gleichstrom bzw. die Umwandlung in Wechselstrom fester Frequenz zu erreichen.

Der Generator kann insbesondere zwei oder mehr Sätze von elektrisch isolierten Windungen aufweisen, welche jeweils um Zähne eines Stators gewickelt sind. Jeder Satz von Windungen bzw. Wicklungen (wobei jeder Satz beispielsweise drei elektrische Phasen umfassen kann), kann einem zugehörigen Konverter zugeführt werden, um die Umwandlung zu erreichen.

Es ist jedoch beobachtet worden, dass ein System bestehend aus einem Generator mit mehreren Sätzen von elektrisch isolierten Windungen und mehreren Konvertern zum Konvertieren des Energiestroms jedes Satzes von elektrisch isolierten Windungen relativ hohe Geräusche bzw. einen hohen Geräuschpegel und Vibrationen erzeugt, was zu mechanischen und/oder elektrischen Belastungen von Komponenten des Systems führen kann und ferner als störend empfunden wird.

In konventionellen Systemen ist ein Verfahren einer Injektion von harmonischem Strom durchgeführt worden, um die Drehmomentschwingungen zu dämpfen. Damit kann eine Dämpfung der Vibration und des Geräusches bei einer gewissen Frequenz erreicht werden. Eine derartige Steuerung erfordert jedoch zusätzliche Mühe und Sorgfalt, um die Parameter genau einzustellen. Die Parameter sind jedoch nicht in jedem Szenario bzw. unter allen Bedingungen anwendbar, um das Vibrations-und Geräuschproblem zu mildern.

Daher gibt es einen Bedarf für ein Konvertersystem und ein Verfahren zum Konvertieren von Wechselstrom, welches eine niedrigere Vibration und Geräusch als entsprechende Systeme des Standes der Technik aufweist.

### Zusammenfassung der Erfindung

Der Bedarf wird befriedigt durch die Gegenstände der unabhängigen Ansprüche. Die abhängigen Ansprüche spezifizieren besondere Ausführungsformen.

Gemäß einer Ausführungsform der vorliegenden Erfindung ist bereitgestellt ein Konvertersystem zum Konvertieren von Wechselstrom variabler Frequenz in Wechselstrom konstanter Frequenz, wobei das Konvertersystem aufweist: einen ersten Konverter, welcher mit einem ersten Satz von Windungen eines Generators elektrisch verbindbar ist, und zumindest einen zweiten Konverter (oder drei, vier, fünf oder mehr), welcher mit einem zweiten Satz von Windungen des Generators elektrisch verbindbar ist, wobei der erste Konverter in einem ersten Betriebsmodus ausgebildet ist, eine erste geschätzte Rotorposition des Generators zu bestimmen, und Ansteuerungen von in dem ersten Konverter umfassten ersten Leistungstransistoren zum Konvertieren des Wechselstroms basierend auf der ersten geschätzten Rotorposition vorzunehmen, wobei der zweite Konverter in einem ersten Betriebsmodus ausgebildet ist, die erste geschätzte Rotorposition des Generators von dem ersten Konverter zu empfangen und Ansteuerungen von in dem zweiten Konverter umfassten zweiten Leistungstransistoren zum Konvertieren des Wechselstroms basierend auf der ersten geschätzten Rotorposition vorzunehmen.

Das Konvertersystem kann zum Beispiel innerhalb einer Windturbine umfasst sein, in der ein elektrischer Generator mit einem Rotor, an dem mehrere Rotorblätter bzw. Schaufeln angebracht sind, gekoppelt ist und einen Wechselstrom bzw. Energiestrom variabler Frequenz (in Abhängigkeit von der Umdrehungsfrequenz des Rotors) erzeugt. Die konstante Frequenz kann zum Beispiel 50 Hz bzw. 60 Hz betragen. Der erste Konverter sowie auch der zweite Konverter können jeweils einen generatorseitigen Teil (einen gleichstromerzeugenden Teil bzw. Gleichrichter) und einen verbrauchernetzseitigen Teil (Wechselstrom fester Frequenz erzeugenden Teil) umfassen, wobei sowohl der generatorseitige Teil als auch der verbrauchernetzseitige Teil jeweils Leistungstransistoren aufweisen kann. Insbesondere kann jeder Teil zum Beispiel jeweils zwei Leistungstransistoren für jede Phase des Wechselstroms umfassen. Gemäß einer besonderen Ausführungsform kann zum Beispiel der generatorseitige Teil des ersten Konverters bzw. des zweiten Konverters sechs Leistungstransistoren umfassen, um drei Phasen zu unterstützen und auch der verbrauchernetzseitige Teil des ersten Konverters bzw. des zweiten Konverters kann jeweils sechs Leistungstransistoren umfassen, um einen dreiphasigen Energiestrom dem Verbrauchernetz zur Verfügung zu stellen. Zwischen dem generatorseitigen Teil und dem verbrauchernetzseitigen Teil kann ein Gleichstromteil (DC-link) angeordnet sein, welcher insbesondere einen Kondensator bzw. ein Kondensatorsystem, um Glätten des durch den generatorseitigen Teil (teilweise) gleichgerichteten Energiestroms zu bewirken. Jeder Konverter, das heißt der erste Konverter sowie auch der zweite Konverter kann jeweils ein Steuerungssystem umfassen, insbesondere kann der erste Kondensator ein erstes Steuerungssystem umfassen und der zweite Kondensator kann ein zweites Steuerungssystem umfassen, um die Leistungstransistoren in dem jeweiligen Konverter zum Öffnen bzw. Schließen anzusteuern, insbesondere mittels Pulsweitemodulationssignalen, welche an jeweilige Gates der Leistungstransistoren zugeführt werden.

Der erste Satz von Windungen des Generators ist elektrisch isoliert von dem zweiten Satz von Windungen. Der erste Satz von Windungen kann sich entweder um den gesamten Umfang des Stators des Generators erstrecken oder kann beispielsweise nur in einem Teilbereich (oder getrennten Teilbereichen) des Umfangs des Generators, beispielsweise auf einer Hälfte, angeordnet sein. Der erste Satz von Windungen kann somit mit dem zweiten Satz von Windungen umfangmäßig überlappen oder kann in anderen Ausführungsformen umfangmäßig nicht überlappen.

Dem ersten Konverter kann insbesondere ein Satz von Messwerten zugeführt werden, welche Ströme des ersten Satzes von Windungen repräsentieren. Insbesondere kann der erste Satz von Windungen drei Phasen entsprechen, und Messwerte über einen Strom in der ersten Phase (auch als U-Strom bezeichnet), ein Messwert über einen Strom in der zweiten Phase (auch als V-Strom bezeichnet) und ein Messwert über einen Strom in der dritten Phase (auch als W-Strom bezeichnet) kann dem ersten Steuerungssystem zugeführt werden. Basierend auf dem U-Strom, dem V-Strom und dem W-Strom kann das erste Steuersystem die erste geschätzte Rotorposition des Generators bestimmen.

Dabei ist die erste geschätzte Rotorposition eine Schätzung einer Winkelposition des Rotors (des innerhalb des Generators rotiert), deren Kenntnis erforderlich ist, um die ersten Leistungstransistoren derart anzusteuern, dass eine gewünschte Gleichrichtung erreicht wird. Zum Bestimmen der geschätzten Rotorposition des Generators können verschiedene Verfahren, wie im Stand der Technik bekannt ist, angewendet werden. Details verschiedener Schätzverfahren können beispielsweise dem Dokument US 6,163,127 entnommen werden.

In dem ersten Betriebsmodus agiert der erste Konverter somit in einem sensorlosen Steuermodus, das heißt in einem Modus, ohne mittels eines zusätzlichen Sensors die tatsächliche Rotorposition mittels einer Messung zu bestimmen.

Neben den Messwerten zu den Strömen in dem ersten Satz von Windungen können dem ersten Steuerungssystem bzw. dem ersten Konverter ferner Referenzwerte von aktiver Leistung, reaktiver Leistung, Spannung, Strom, usw. zugeführt werden, welche insbesondere zur Bestimmung von Ansteuerungssignalen für Leistungstransistoren des verbrauchernetzseitigen Teils verwendet werden können, um eine gewünschte aktive Leistung, reaktive Leistung, Spannung, Strom bei einem Ausgabeanschluss bzw. mehrphasigen Ausgabeport des ersten Konverters zu erreichen.

In dem ersten Betriebsmodus gibt der erste Konverter ein Signal, welches die erste geschätzte Rotorposition repräsentiert, an den zweiten Konverter aus. Der zweite Konverter empfängt die erste geschätzte Rotorposition (beispielsweise repräsentiert durch ein elektrisches, optisches Signal) von dem ersten Konverter und wird in einem Modus betrieben, welcher herkömmlicherweise auch als Modus bezeichnet ist, in welchem ein Messsignal über eine aktuelle Position des Rotors empfangen wird (*sensored control*). Ein derartiger Betriebsmodus ist in konventionellen Konvertern unterstützt und somit kann das Konvertersystem aus konventionell erhältlichen Konvertern zusammengebaut werden, indem beispielsweise die von dem ersten Konverter erste geschätzte Rotorposition einem Eingang des zweiten Konverters zugeführt wird, welcher in einem konventionellen System zum Empfangen eines Messsignals der aktuellen Rotorposition vorgesehen ist.

Der zweite Konverter bestimmt in seinem ersten Betriebsmodus nicht selbst eine geschätzte Rotorposition, sondern verwendet stattdessen die erste geschätzte Rotorposition, welche von dem ersten Konverter bestimmt ist und steuert basierend auf dieser ersten geschätzten Rotorposition die zweiten Leistungstransistoren, welche in dem zweiten Konverter umfasst sind. Insbesondere können die zweiten Leistungstransistoren, welche basierend auf der ersten geschätzten Rotorposition angesteuert sind, teilweise bzw. ausschließlich in dem generatorseitigen Teil des zweiten Konverters angeordnet sein. Auch die ersten Leistungstransistoren des ersten Konverters können in dem generatorseitigen Teil des ersten Konverters angeordnet sein.

Der Generator kann zum Beispiel zwei Sätze von drei-Phase-Wicklungen aufweisen. Die zwei Sätze sind elektrisch isoliert voneinander. Der Vorteil eines solchen Systems ist, dass wenn ein Satz von Wicklungen bzw. einer des ersten Kondensators oder des zweiten Kondensators technische Probleme aufweist, das andere System nichtsdestotrotz weiter elektrische Energie erzeugen kann. Die beiden Sätze von Windungen können jedoch magnetisch gekoppelt sein. Beispielsweise können die Ströme in einem Satz von Windungen signifikant die Spannung in dem anderen Satz von Windungen beeinflussen.

Gemäß dieser Ausführungsform der vorliegenden Erfindung werden somit der erste Konverter und der zweite Konverter durch dieselbe (geschätzte) Rotorposition als Eingabe betrieben. Insbesondere kann der erste Konverter eine gleiche bzw. identische Konstruktion wie der zweite Konverter aufweisen. Der erste Konverter und der zweite Konverter werden somit nicht unabhängig voneinander betrieben. In herkömmlichen Systemen kann es vorkommen, dass bei unabhängig betriebenen Konvertern die jeweils geschätzten Rotorpositionen leicht verschieden sind, da die mehreren Sätze von Windungen magnetisch gekoppelt sind und daher die Ströme in einem Satz von Windungen die Spannungen bzw. Ströme eines anderen Satzes von Windungen beeinflussen. Damit kann auch eine Schätzung der Rotorposition, welche auf Strommessungen beruht, für die verschiedenen Konverter unterschiedlich sein, gemäß herkömmlichen Systemen. In herkömmlichen Systemen kann dieser Fehler bzw. diese Abweichung zwischen den geschätzten Rotorpositionen, welche durch verschiedene Konverter bestimmt sind, zu einem Fehler in ihrem Id und Iq führen, was wiederum zu einem Fehler in der Rotorpositionsschätzung führen kann. Damit wurde in herkömmlichen Systemen eine relativ große Vibration und Geräuschentwicklung beobachtet, da selbst eine leichte Fehlübereinstimmung in der geschätzten Rotorposition von zwei Konvertern signifikante Drehmomentschwingungen (*torque ripple*) erzeugen. Auch ist beobachtet worden, dass herkömmliche zwei-Konverter-Systeme eine beträchtlich größere Vibration und Geräusch als ein Einkonvertersystem mit nur einem Satz von Windungen aufweisen.

Gemäß einer Ausführungsform der vorliegenden Erfindung unterstützt der Generator zwei (oder drei, vier, fünf bis acht oder mehr) Sätze von 3-Phase-Windungen bzw. Wicklungen. Die zwei Sätze von Windungen sind mit dem ersten und dem zweiten Konverter verbunden. In dem ersten Betriebsmodus kann der erste Konverter als das Hauptsystem agieren und eine "fühlerlose Steuerung" (*sensorless control*) durchführen, während der zweite Konverter eine konventionell als "gefühlte Steuerung" (*sensored control*) bezeichnete Steuerung durchführt. Dazu gibt der erste Konverter die erste geschätzte Rotorposition an den zweiten Konverter aus. Der zweite Konverter kann die Gate-Signale für seinen generatorseitigen Konverterteil (den Gleichrichter) gemäß dem ersten geschätzten Rotorpositionssignal von dem ersten Konverter erzeugen. Obwohl der zweite Konverter den gefühlte-Steuerungs-Algorithmus verwendet, braucht das Gesamtsystem keinen Rotorpositionssensor, da der erste Konverter die Funktion eines Rotorpositionssensors (durch Schätzung der Rotorposition) erfüllt. Auf diese Weise teilen der erste Konverter und der Konverter dieselbe geschätzte Rotorposition, so dass das Problem einer Abweichung von zwei unabhängig geschätzten Rotorpositionen behoben oder zumindest abgemildert ist, was in der Folge auch zu geringerer Vibration und geringerem Geräusch führen kann.

Gemäß einer Ausführungsform der vorliegenden Erfindung ist das Konvertersystem ausgestaltet, wobei der zweite Konverter ausgebildet ist, in einen zweiten Betriebsmodus einzutreten, wobei der zweite Konverter in dem zweiten Betriebsmodus ausgebildet ist: eine zweite geschätzte Rotorposition des Generators zu bestimmen, und Ansteuerungen von den zweiten Leistungstransistoren basierend auf der zweiten geschätzten Rotorposition vorzunehmen.

In dem zweiten Betriebsmodus ist somit der zweite Konverter ausgebildet, seinerseits eine Rotorposition zu schätzen, das heißt die zweite geschätzte Rotorposition. Damit kann im Falle eines Fehlers eine Unabhängigkeit von der Funktionsfähigkeit des ersten Konverters erreicht werden, was einen kontinuierlichen Betrieb ermöglichen kann.

Gemäß einer Ausführungsform der vorliegenden Erfindung ist der zweite Konverter ausgebildet, in den zweiten Betriebsmodus in dem Fall einzutreten, dass aufgrund eines Fehlers in dem ersten Konverter und/oder eines Datenübermittlungsfehlers keine erste geschätzte Rotorposition des Generators empfangen wird.

Somit kann der zweite Konverter seine Konvertierungsfunktion auch dann ausführen, wenn er das erste geschätzte Rotorsignal zum Beispiel aufgrund eines Fehlers nicht erhält.

Dazu kann der zweite Konverter automatisch in den zweiten Betriebsmodus eintreten, wenn er keine erste geschätzte Rotorposition bzw. ein zugeordnetes Signal empfängt. Der erste Kondensator und der zweite Kondensator sind physikalisch dieselben Konverter. Beide Systeme können sowohl eine fühlerlose Steuerung bzw. eine gefühlte Steuerung ausführen, das heißt können beide eine jeweilige Rotorposition abschätzen oder können von dem jeweils anderen Konverter die geschätzte Rotorposition empfangen. Der erste Konverter kann als ein Hauptsystem aufgestellt werden, wobei seine fühlerlose Steuerung aktiviert ist und seine gefühlte Steuerung deaktiviert ist entweder durch Hardware oder Software. Im Gegensatz dazu kann die fühlerlose Steuerung des zweiten Konverters deaktiviert sein und seine gefühlte Steuerung kann entweder durch Hardware oder durch Software aktiviert werden. Der erste Konverter kann seine erste geschätzte Rotorposition an den zweiten Konverter ausgeben, so dass der zweite Konverter das Gate-Signal bzw. die Gate-Signale gemäß der ersten geschätzten Rotorposition erzeugen kann. Auf diese Weise ist nur ein Typ von Konverter benötigt. Wenn der erste Konverter eine Funktionsstörung hat, kann die sensorlose Steuerung des zweiten Konverters leicht aktiviert werden, so dass der zweite Konverter das Hauptkonvertersystem wird und unabhängig von dem ersten Konverter betrieben werden kann.

Die Aktivierung des gefühlten Steueralgorithmus und die Deaktivierung des fühlerlosen Steueralgorithmus des zweiten Konverters kann automatisch erfolgen. Das zweite Steuerungssystem des zweiten Konverters kann detektieren, ob es ein Eingabesignal einer Rotorposition gibt. Wenn ein Rotorpositionssignal empfangen wird bzw. detektiert wird, kann der zweite Konverter automatisch das gefühlte Steuerverfahren aktivieren (erster Betriebsmodus des zweiten Konverters) und das fühlerlose Steuerverfahren (zweiter Betriebsmodus des zweiten Konverters) deaktivieren.

Gemäß einer Ausführungsform der vorliegenden Erfindung ist der erste Konverter in einem zweiten Betriebsmodus ausgebildet, die zweite geschätzte Rotorposition des Generators von dem zweiten Konverter zu empfangen, und Ansteuerungen von den ersten Leistungstransistoren basierend auf der zweiten geschätzten Rotorposition vorzunehmen. Somit können der erste Konverter und der zweite Konverter gegenüber dem jeweiligen ersten Betriebsmodus die Rollen tauschen. Somit kann ein anhaltender Betrieb und eine anhaltende Energieerzeugung verbessert werden.

Gemäß einer Ausführungsform der vorliegenden Erfindung ist das Konvertersystem derart ausgestaltet, wobei der zweite Konverter ausgebildet ist, in einen dritten Betriebsmodus einzutreten, wobei der zweite Konverter in dem dritten Betriebsmodus ausgebildet ist, die zweite geschätzte Rotorposition des Generators zu bestimmen, die erste geschätzte Rotorposition des Generators von dem ersten Konverter zu empfangen, und Ansteuerungen von den zweiten Leistungstransistoren basierend auf der ersten geschätzten Rotorposition und der zweiten geschätzten Rotorpositionen vorzunehmen.

Somit kann der zweite Konverter sowohl die erste geschätzte Rotorposition als auch die (selbstbestimmte) zweite geschätzte Rotorposition des Generators zum Bestimmen von Ansteuerungssignalen, insbesondere Gate-Signalen, zur Ansteuerung der zweiten Leistungstransistoren verwenden. Damit kann die Konvertierung ferner verbessert werden. Insbesondere kann jede geschätzte Rotorposition, das heißt die erste geschätzte Rotorposition und die zweite geschätzte Rotorposition, Fehler aufweisen, welche durch Berücksichtigung beider geschätzter Rotorpositionen vermindert werden können.

Gemäß einer Ausführungsform der vorliegenden Erfindung ist das Konvertersystem ausgebildet, wobei der erste Konverter ausgebildet ist, in einen dritten Betriebsmodus einzutreten, wobei der erste Konverter in dem dritten Betriebsmodus ausgebildet ist, Ansteuerungen von den ersten Leistungstransistoren basierend auf der ersten geschätzten Rotorposition und der zweiten geschätzten Rotorpositionen vorzunehmen.

Auch der erste Konverter kann somit beide geschätzte Rotorpositionen zur Bestimmung bzw. Berechnung von Gate-Signalen zur Ansteuerung der ersten Leistungskondensatoren heranziehen, was den Betrieb des Konvertersystems weiter verbessern kann, insbesondere wenn die jeweilig geschätzten Rotorpositionen Fehler aufweisen.

Gemäß einer Ausführungsform der vorliegenden Erfindung sind der erste Konverter und/oder der zweite Konverter in dem jeweils dritten Betriebsmodus ausgebildet, die zweite geschätzte Rotorposition des Generators mit der ersten geschätzten Rotorposition des Generators zu vergleichen, um eine Differenz der geschätzten Rotorpositionen zu bestimmen, wobei der zweite Konverter in dem dritten Betriebsmodus ausgebildet ist, Ansteuerungen von den zweiten Leistungstransistoren basierend auf der zweiten geschätzten Rotorposition vorzunehmen, falls die Differenz größer als ein Schwellwert ist.

Ein Vergleich der ersten geschätzten Rotorposition mit der zweiten geschätzten Rotorposition kann einen Fehler bzw. mehrere Fehler in den jeweiligen Schätzungen identifizieren, insbesondere wenn die Differenz der geschätzten Rotorpositionen relativ groß ist, das heißt größer als der Schwellwert. Falls die Differenz größer ist als der Schwellwert, kann dies anzeigen, dass die erste geschätzte Rotorposition große Abweichungen zu einer tatsächlichen Rotorposition aufweist, und somit kann der zweite Konverter der ersten geschätzten Rotorposition nicht trauen. Daher zieht der zweite Konverter seine eigene zweite geschätzte Rotorposition heran, um Ansteuerungen der zweiten Leistungstransistoren vorzunehmen. Damit kann der Betrieb des Konvertersystems weiter verbessert werden.

Gemäß einer Ausführungsform der vorliegenden Erfindung ist der erste Konverter in dem dritten Betriebsmodus ausgebildet, Ansteuerungen von den ersten Leistungstransistoren basierend auf der ersten geschätzten Rotorposition vorzunehmen, falls die Differenz größer als der Schwellwert ist.

Hierbei kann somit eine fehlerhafte Schätzung der Rotorposition durch den zweiten Konverter detektiert werden, woraufhin der erste Konverter stattdessen seine eigene geschätzte, das heißt die erste geschätzte Rotorposition, zur Ansteuerung der ersten Leistungstransistoren verwendet.

Die Deaktivierung des fühlerlosen Algorithmus (zweiter Betriebsmodus des zweiten Konverters) kann zwei Optionen habe: (1) Schätzen der Rotorposition wird gestoppt oder (2) der zweite Konverter schätzt weiterhin die Rotorposition, aber die geschätzte Rotorposition, das heißt die zweite geschätzte Rotorposition, ist nicht benutzt, um die Ansteuerungssignale der zweiten Leistungstransistoren zu erzeugen. Der zweite Konverter kann in dieser zweiten Option kontinuierlich beide geschätzte Rotorpositionen, das heißt die erste geschätzte Rotorposition und die zweite geschätzte Rotorposition, vergleichen, um die Differenz zu berechnen. Wenn die Differenz innerhalb eines vorher gesetzten Bereiches liegt, kann der zweite Konverter die erste geschätzte Rotorposition (welche von dem ersten Konverter erhalten ist) verwenden, um die Ansteuerungssignale für die zweiten Leistungstransistoren zu erzeugen. Wenn jedoch die Differenz größer als der Schwellwert ist, kann der zweite Konverter bestimmen, dass der ersten geschätzten Rotorposition nicht getraut werden kann und stattdessen die zweite geschätzte Rotorposition verwenden, um die Ansteuerungssignale für die zweiten Leistungstransistoren zu erzeugen.

Gemäß einer Ausführungsform der vorliegenden Erfindung ist der erste Konverter in dem dritten Betriebsmodus ausgebildet, Ansteuerungen von den ersten Leistungstransistoren basierend auf einem Zwischenwert zwischen der ersten geschätzten Rotorposition und der zweiten geschätzten Rotorposition vorzunehmen, wobei der zweite Konverter in dem dritten Betriebsmodus insbesondere ausgebildet ist, Ansteuerungen von den zweiten Leistungstransistoren basierend auf dem Zwischenwert vorzunehmen.

Wenn sowohl die erste geschätzte Rotorposition als auch die zweite geschätzte Rotorposition Abweichungen zu der tatsächlichen Rotorposition aufweisen, kann der Zwischenwert eine geringere Abweichung von der tatsächlichen Rotorposition haben. Daher kann ein Verwenden des Zwischenwertes, um jeweilige Ansteuerungssignale für die ersten Leistungstransistoren und/oder die zweiten Leistungstransistoren zu erzeugen, zu einer Verbesserung des Konvertersystems führen.

Gemäß einer Ausführungsform der vorliegenden Erfindung ist der erste Konverter ausgebildet, die erste geschätzte Rotorposition des Generators basierend auf elektrischen Strömen in dem ersten Satz von Windungen zu bestimmen, wobei der zweite Konverter ausgebildet ist, die zweite geschätzte Rotorposition des Generators basierend auf elektrischen Strömen in dem zweiten Satz von Windungen zu bestimmen.

Die Schätzungen aufgrund der elektrischen Ströme (insbesondere drei Ströme entsprechend drei Phasen) kann durch verschiedene Verfahren, wie es in dem Stand der Technik (z.B. US 6,163,127) bekannt ist, vorgenommen werden. Somit können herkömmliche Verfahren zur Implementierung des Konvertersystems verwendet werden.

Gemäß einer Ausführungsform der vorliegenden Erfindung ist weist der erste Satz von Windungen und oder der zweite Satz von Windungen jeweils zumindest drei Windungsgruppen auf, welche um Zähne des Generators gewickelt sind und welche elektrisch isoliert voneinander sind. Der erste Satz von Windungen und der zweite Satz von Windungen kann um die Zähne eines Stators des Generators gewickelt sein. Verschiedene Wicklungsverfahren können eingesetzt werden. Der erste Satz von Windungen kann durch drei elektrische Leiter aus dem Generator herausgeführt werden, welche mit drei elektrischen Eingangsanschlüssen des generatorseitigen Teils des ersten Konverters verbunden sind bzw. verbindbar sind.

Gemäß einer Ausführungsform der vorliegenden Erfindung ist der erste Satz von Windungen in Umfangsrichtung des Generators überlappend mit dem zweiten Satz von Windungen gewickelt.

Somit kann eine Verschiedenheit von Wicklungskonfigurationen unterstützt sein.

Gemäß einer Ausführungsform der vorliegenden Erfindung ist das Konvertersystem ausgestaltet, wobei Ansteuerungen der ersten und/oder zweiten Leistungstransistoren durch Zuführen von Gate-Treiber-Signalen, insbesondere Pulsbreitemodulationssignale, an Gates der ersten und/oder zweiten Leistungstransistoren vorgenommen werden. Die Ansteuerungen bzw. das Erzeugen der Gate-Treiber-Signale kann jeweils durch das erste Steuerungssystem (für den ersten Konverter) und das zweite Steuerungssystem (für den zweiten Konverter) durchgeführt werden.

Gemäß einer Ausführungsform der vorliegenden Erfindung ist eine Windturbine bereitgestellt, aufweisend einen Rotor mit Rotorblattern, einen von dem Rotor antreibbaren Generators, und ein Konvertersystem gemäß einem der vorangehenden Ausführungsformen.

Es sollte bemerkt werden, dass Merkmale, welche individuell, oder in irgendeiner Kombination im Zusammenhang mit einem Konvertersystem gemäß einer Ausführungsform der vorliegenden Erfindung beschrieben, erwähnt, erläutert oder bereitgestellt sind, auch individuell oder in jeder Kombination für ein Verfahren zum Konvertieren von Wechselstrom variabler Frequenz in Wechselstrom konstanter Frequenz gemäß einer Ausführungsform der vorliegenden Erfindung eingesetzt bzw. bereitgestellt werden können.

Gemäß einer Ausführungsform der vorliegenden Erfindung ist bereitgestellt ein Verfahren zum Konvertieren von Wechselstrom variabler Frequenz in Wechselstrom konstanter Frequenz, wobei das Verfahren aufweist: Bestimmen, mittels eines ersten Konverters, welcher mit einem ersten Satz von Windungen eines Generators elektrisch verbunden ist, einer ersten geschätzten Rotorposition des Generators, Ansteuerungen von in dem ersten Konverter umfassten ersten Leistungstransistoren zum Konvertieren des Wechselstroms basierend auf der ersten geschätzten Rotorposition vorzunehmen, Empfangen, von einem zweiten Konverter, welcher mit einem zweiten Satz von Windungen eines Generators elektrisch verbunden ist, der ersten geschätzte Rotorposition des Generators von dem ersten Konverter, und Ansteuerungen von in dem zweiten Konverter umfassten zweiten Leistungstransistoren zum Konvertieren des Wechselstroms basierend auf der ersten geschätzten Rotorposition.

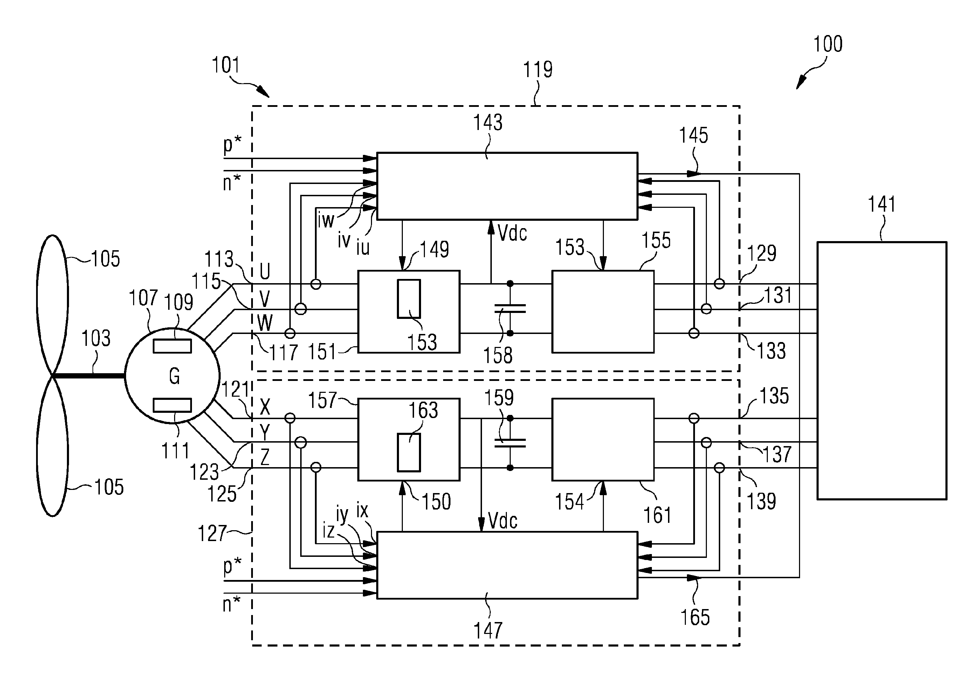

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieser Anmeldung sind lediglich als schematisch und als nicht maßstabsgetreu anzusehen.

### Kurze Beschreibung der Zeichnungen

Die Figur zeigt schematisch eine Windturbine, welche ein Konvertersystem gemäß einer Ausführungsform der vorliegenden Erfindung umfasst.

### Detaillierte Beschreibung

Die Figur illustriert schematisch eine Windturbine 100, welche ein Konvertersystem 101 gemäß einer Ausführungsform der vorliegenden Erfindung umfasst. Es handelt sich um eine direkt angetriebene Windkraftanlage ohne Schaft. Der Rotor des Generators wird direkt vom Rotor 103 (Flügel 105 und Nabe), das über ein Hauptlager in Verbindung ist, angetrieben. Der Rotor des Generators ist mit Permanentmagneten ausgestattet und umgibt den Stator des Generators.

Die Turbine 100 umfasst einen Rotor 103, an dem eine Mehrzahl von Schaufeln bzw. Rotorblättern 105 angebracht sind. Der Rotor 103 rotiert innerhalb eines Generators 107, welcher einen nicht illustrierten Stator aufweist, um den ein erster Satz von Windungen 109 und ein zweiter Satz von Windungen 111 gewickelt sind, welche in der Figur lediglich schematisch gezeichnet sind. Der erste Satz 109 von Windungen und der zweite Satz 111 von Windungen können überlappend (in einer Umfangsrichtung) oder nicht überlappend innerhalb des Stators des Generators 107 angeordnet sein.

Aus dem ersten Satz 109 von Windungen führen elektrische Leiter 113, 115 und 117 aus dem Generator 107 heraus, welche drei elektrische Phasen U, V und W an einen ersten Konverter 119 zuführen. Von dem zweiten Satz 111 von elektrischen Windungen innerhalb des Generators 107 werden elektrische Leiter 121, 123 und 125 entsprechend den drei Phasen X, Y und Z an einen zweiten Konverter 127 zugeführt.

Das Konvertersystem 101 umfasst den ersten Konverter 119 und den zweiten Konverter 127, welche Energieströme, welche in dem ersten Satz 109 von Windungen erzeugt bzw. in dem zweiten Satz 111 von Windungen erzeugt sind, mittels des ersten Konverters 119 bzw. des zweiten Konverters 127 in einen Energiestrom umwandelt, welcher die Phasen 129, 131 bzw. 133 und die drei Phasen 135, 137 bzw. 139 aufweist, welche schließlich einem Verbrauchernetz 141 zugeführt werden.

Der erste Konverter 119 umfasst ein erstes Steuerungssystem 143, welches Strommesssignale iw, iv, iu empfängt, welche die Höhe von Strömen innerhalb des ersten Satzes 109 von Windungen repräsentieren. Basierend auf den gemessenen Strömen iw, iv, iu schätzt das erste Steuerungssystem 143 des ersten Konverters 119 eine erste geschätzte Rotorposition 145, welche von dem ersten Konverter 119 ausgegeben wird und einem zweiten Steuerungssystem 147 des zweiten Konverters 127 zugeführt wird. Insbesondere gibt der erste Konverter 119 in einem ersten Betriebsmodus die erste geschätzte Rotorposition 145 an den zweiten Konverter 127 aus, welcher die erste geschätzte Rotorposition 145 empfängt. In dem ersten Betriebsmodus erzeugt das erste Steuerungssystem 143 Ansteuerungs-Gate-Signale 149 basierend auf der ersten geschätzten Rotorposition 145 und führt diese Ansteuerungssignale 149 einem generatorseitigen Teil 151 des Konverters 119 zu, insbesondere an in der Figur dargestellte erste Leistungstransistoren 153. Andere Ansteuerungssignale 153 werden einem verbrauchernetzseitigen Teil 155 (auch als Inverter bezeichnet) zugeführt. Ebenfalls werden die Ausgabephasen bzw. Messsignale eines Stroms bzw. einer Spannung dieser Phasen 129, 131, 133 dem ersten Steuerungssystem 143 zugeführt, um auch diese Ausgabephasen 129, 131, 133 zur Bestimmung der Ansteuerungssignale 149 und/oder 153 heranzuziehen. Ferner erhält das erste Steuerungssystem 143 externe Signale P*, n*, welche beispielsweise aktive Leistung, reaktive Leistung, Spannung, Strom bei den Ausgabephasen 129, 131, 133 repräsentieren können bzw. daraus ableitbar sein können. Zwischen dem generatorseitigen Teil 151 und dem verbrauchernetzseitigen Teil 155 umfasst der erste Konverter 119 einen Kondensator 158.

Der zweite Konverter 127 ist physikalisch gleichartig aufgebaut und konstruiert wie der erste Konverter 119 und umfasst auch einen generatorseitigen Teil 157 (auch als Gleichrichter bezeichnet), einen Kondensator 159 und einen verbrauchernetzseitigen Teil 161 (auch als Inverter bezeichnet).

In dem ersten Betriebsmodus bestimmt der erste Konverter 119 die erste geschätzte Rotorposition 145 und steuert die ersten Leistungstransistoren 153 basierend auf der ersten geschätzten Rotorposition 145. In seinem ersten Betriebszustand empfängt der zweite Konverter 127 die erste geschätzte Rotorposition 145 und steuert seinerseits zweite Leistungstransistoren 163 (innerhalb des Gleichrichters 157) basierend auf der ersten geschätzten Rotorposition 145.

In einem zweiten Betriebsmodus jedoch bestimmt der zweite Konverter 127 eine zweite geschätzte Rotorposition 165 basierend auf den drei Phasenströmen iz, iy, ix, welche gemessenen Strömen der Phasen 121, 123, 125 entsprechen. In diesem zweiten Betriebsmodus steuert der zweite Konverter 127 die zweiten Leistungstransistoren 163 innerhalb des Gleichrichters 157 basierend auf der zweiten geschätzten Rotorposition 165. Der zweite Konverter 127 kann in diesen zweiten Betriebsmodus eintreten (zum Beispiel in automatischer Weise), wenn er detektiert, dass ein die erste geschätzte Rotorposition repräsentierendes Signal 145 nicht empfangen ist, insbesondere nicht von dem ersten Konverter ausgegeben 119 empfangen ist.

In einem zweiten Betriebsmodus kann der erste Konverter 119 ausgebildet sein, eine von dem zweiten Konverter 127 ausgegebene zweite geschätzte Rotorposition 165 zu empfangen und die ersten Leistungstransistoren 153 basierend auf der zweiten geschätzten Rotorposition anzusteuern. Alternativ kann der erste Konverter 119 in seinem zweiten Betriebszustand ähnlich wie in seinem ersten Betriebszustand die ersten Leistungstransistoren 153 basierend auf der ersten geschätzten Rotorposition 145 ansteuern.

In einem dritten Betriebsmodus des zweiten Konverters 127 bestimmt der zweite Konverter 127 sowohl die zweite geschätzte Rotorposition 165 basierend auf den Windungsströmen iz, iy, ix als auch empfängt der zweite Konverter 127 die erste geschätzte Rotorposition 145 von dem ersten Konverter 119. Basierend sowohl auf der ersten geschätzten Rotorposition 145 als auch auf der zweiten geschätzten Rotorposition 165 steuert der erste Konverter 127 die zweiten Leistungstransistoren 163 an, das heißt erzeugt entsprechende Gate-Treibersignale für Gates der zweiten Leistungstransistoren 163. In einem dritten Betriebsmodus kann auch der erste Konverter 119 ausgebildet sein, die Gate-Treibersignale 149 basierend sowohl auf der ersten geschätzten Rotorposition 145 als auch auf der von dem zweiten Konverter 127 empfangenen zweiten geschätzten Rotorposition 165 bestimmen.

In dem dritten Betriebsmodus kann der zweite Konverter 127 beispielsweise die von dem ersten Konverter empfangene erste geschätzte Rotorposition 145 mit der selbstbestimmten zweiten geschätzten Rotorposition 165 vergleichen, um eine Differenz zu bestimmen. Wenn die Differenz einen Schwellwert übersteigt, kann der zweite Konverter 127 die Gate-Treibersignale 150 basierend nur auf dem selbst abgeschätzten bzw. bestimmten zweiten geschätzten Rotorposition 165 ansteuern. Ähnlich kann der erste Konverter 119 agieren.

Gemäß einer anderen Ausführungsform kann der erste Konverter 119 und/oder der zweite Konverter 127 jeweils selbst eine geschätzte Rotorposition bestimmen und eine von dem jeweils anderen Konverter bestimmte andere geschätzte Rotorposition empfangen und die jeweiligen Leistungstransistoren 153, 163 basierend zum Beispiel auf einem Zwischenwert zwischen der selbstbestimmten geschätzten Rotorposition und der empfangenen geschätzten Rotorposition ansteuern, beispielsweise basierend auf einem Mittelwert.

Ausführungsformen der vorliegenden Erfindung ermöglichen, dass zwei oder mehr Konvertersysteme, wie etwa der erste Konverter 119 und der zweite Konverter 127, dasselbe Rotorpositionssignal gemeinsam nutzen, so dass Ansteuerungen von jeweiligen Leistungstransistoren in konsistenter Weise erfolgen können, so dass Geräuschentwicklung und Vibration signifikant vermindert werden können. Dadurch kann eine Zuverlässigkeit des Systems verbessert werden. Das Konzept gemäß verschiedener Ausführungsformen kann auf Generatoren mit mehr als zwei Sätzen von elektrisch unabhängigen Windungen erweitert werden. In solchen Ausführungsformen kann jeder Satz von Windungen innerhalb eines Generators mit einem zugehörigen Konverter verbunden sein, welcher mit einem oder mehr anderen Konvertern Rotorpositionssignale austauschen können, und die jeweiligen Leistungstransistoren basierend auf gemeinsam ausgetauschten Rotorpositionssignalen ansteuern kann.

## Patentansprüche

1. Konvertersystem (101) zum Konvertieren von Wechselstrom (113,115,117,121,123,125) variabler Frequenz in Wechselstrom (129,131,133,135,137,139) konstanter Frequenz, wobei das Konvertersystem aufweist:
einen ersten Konverter (119), welcher mit einem ersten Satz (109) von Windungen eines Generators (107) elektrisch verbindbar ist; und
zumindest einen zweiten Konverter (127), welcher mit einem zweiten Satz (111) von Windungen des Generators (107) elektrisch verbindbar ist,
wobei der erste Konverter in einem ersten Betriebsmodus ausgebildet ist,
eine erste geschätzte Rotorposition (145) des Generators (107) zu bestimmen, und
Ansteuerungen von in dem ersten Konverter umfassten ersten Leistungstransistoren (153) zum Konvertieren des Wechselstroms basierend auf der ersten geschätzten Rotorposition (145) vorzunehmen,
wobei der zweite Konverter (127) in einem ersten Betriebsmodus ausgebildet ist,
die erste geschätzte Rotorposition (145) des Generators (107) von dem ersten Konverter (119) zu empfangen, und
Ansteuerungen von in dem zweiten Konverter (127) umfassten zweiten Leistungstransistoren (163) zum Konvertieren des Wechselstroms basierend auf der ersten geschätzten Rotorposition (145) vorzunehmen.

2. Konvertersystem gemäß Anspruch 1,
wobei der zweite Konverter (127) ausgebildet ist, in einen zweiten Betriebsmodus einzutreten,
wobei der zweite Konverter in dem zweiten Betriebsmodus ausgebildet ist:
eine zweite geschätzte Rotorposition (165) des Generators (107) zu bestimmen, und
Ansteuerungen von den zweiten Leistungstransistoren (163) basierend auf der zweiten geschätzten Rotorposition vorzunehmen.

3. Konvertersystem gemäß Anspruch 2,
wobei der zweite Konverter (127) ausgebildet ist, in den zweiten Betriebsmodus in dem Fall einzutreten, dass aufgrund eines Fehlers in dem ersten Konverter (119) und/oder eines Datenübermittlungsfehlers keine erste geschätzte Rotorposition (145) des Generators (107) empfangen wird.

4. Konvertersystem gemäß Anspruch 2 oder 3,
wobei der erste Konverter (119) in einem zweiten Betriebsmodus ausgebildet ist,
die zweite geschätzte Rotorposition (165) des Generators (107) von dem zweiten Konverter (127) zu empfangen, und
Ansteuerungen von den ersten Leistungstransistoren (163) basierend auf der zweiten geschätzten Rotorposition (165) vorzunehmen.

5. Konvertersystem gemäß einem der vorangehenden Ansprüche,
wobei der zweite Konverter (127) ausgebildet ist, in einen dritten Betriebsmodus einzutreten,
wobei der zweite Konverter in dem dritten Betriebsmodus ausgebildet ist:
die zweite geschätzte Rotorposition (165) des Generators zu bestimmen,
die erste geschätzte Rotorposition (145) des Generators von dem ersten Konverter zu empfangen, und
Ansteuerungen von den zweiten Leistungstransistoren (163) basierend auf der ersten geschätzten Rotorposition (145) und der zweiten geschätzten Rotorpositionen (165) vorzunehmen.

6. Konvertersystem gemäß dem vorangehenden Anspruch,
wobei der erste Konverter ausgebildet ist, in einen dritten Betriebsmodus einzutreten,
wobei der erste Konverter in dem dritten Betriebsmodus ausgebildet ist;
Ansteuerungen von den ersten Leistungstransistoren (153) basierend auf der ersten geschätzten Rotorposition (145) und der zweiten geschätzten Rotorpositionen (165) vorzunehmen.

7. Konvertersystem gemäß Anspruch 5 oder 6,
wobei der erste Konverter (119) und/oder der zweite Konverter (127) in dem jeweils dritten Betriebsmodus ausgebildet ist,
die zweite geschätzte Rotorposition (165) des Generators mit der ersten geschätzten Rotorposition (145) des Generators zu vergleichen, um eine Differenz der geschätzten Rotorpositionen zu bestimmen,
wobei der zweite Konverter in dem dritten Betriebsmodus ausgebildet ist, Ansteuerungen von den zweiten Leistungstransistoren (163) basierend auf der zweiten geschätzten Rotorposition vorzunehmen, falls die Differenz größer als ein Schwellwert ist.

8. Konvertersystem gemäß Anspruch 7,
wobei der erste Konverter (119) in dem dritten Betriebsmodus ausgebildet ist, Ansteuerungen von den ersten Leistungstransistoren (153) basierend auf der ersten geschätzten Rotorposition (145) vorzunehmen, falls die Differenz größer als der Schwellwert ist.

9. Konvertersystem gemäß Anspruch 6,
wobei der erste Konverter (119) in dem dritten Betriebsmodus ausgebildet ist, Ansteuerungen von den ersten Leistungstransistoren (153) basierend auf einem Zwischenwert zwischen der ersten geschätzten Rotorposition (145) und der zweiten geschätzten Rotorposition (165) vorzunehmen,
wobei der zweite Konverter (127) in dem dritten Betriebsmodus insbesondere ausgebildet ist, Ansteuerungen von den zweiten Leistungstransistoren (163) basierend auf dem Zwischenwert vorzunehmen.

10. Konvertersystem gemäß einem der vorangehenden Ansprüche,
wobei der erste Konverter (119) ausgebildet ist, die erste geschätzte Rotorposition (145) des Generators basierend auf elektrischen Strömen (iw,iv,iu) in dem ersten Satz (109) von Windungen zu bestimmen,
wobei der zweite Konverter (127) ausgebildet ist, die zweite geschätzte Rotorposition (145) des Generators basierend auf elektrischen Strömen (iz,iy,ix) in dem zweiten Satz (111) von Windungen zu bestimmen.

11. Konvertersystem gemäß einem der vorangehenden Ansprüche, wobei der erste Satz (109) von Windungen und oder der zweite Satz (111) von Windungen jeweils zumindest drei Windungsgruppen aufweist, welche um Zähne des Generators gewickelt sind und welche elektrisch isoliert voneinander sind.

12. Konvertersystem gemäß einem der vorangehenden Ansprüche, wobei der erste Satz (109) von Windungen in Umfangsrichtung des Generators überlappend mit dem zweiten Satz (111) von Windungen gewickelt ist.

13. Konvertersystem gemäß einem der vorangehenden Ansprüche, wobei Ansteuerungen der ersten und/oder zweiten Leistungstransistoren (153,163) durch Zuführen von Gate-Treiber-Signalen (149,150), insbesondere Pulsbreitemodulationssignale, an Gates der ersten und/oder zweiten Leistungstransistoren (153,163), insbesondere innerhalb eines Gleichrichterteils des jeweiligen Konverters, vorgenommen werden.

14. Windturbine (100), aufweisend:
einen Rotor (103) mit Rotorblättern (105);
einen von dem Rotor antreibbaren Generator (107); und
ein Konvertersystem (101) gemäß einem der vorangehenden Ansprüche.

15. Verfahren zum Konvertieren von Wechselstrom variabler Frequenz in Wechselstrom konstanter Frequenz, wobei das Verfahren aufweist:
Bestimmen, mittels eines ersten Konverters (119), welcher mit einem ersten Satz (109) von Windungen eines Generators (107) elektrisch verbunden ist, einer ersten geschätzten Rotorposition (145) des Generators (107);
Ansteuerungen von in dem ersten Konverter umfassten ersten Leistungstransistoren (153) zum Konvertieren des Wechselstroms basierend auf der ersten geschätzten Rotorposition (145) vorzunehmen;
Empfangen, von einem zweiten Konverter (127), welcher mit einem zweiten Satz (111) von Windungen des Generators elektrisch verbunden ist, der ersten geschätzten Rotorposition (145) des Generators von dem ersten Konverter; und
Ansteuerungen von in dem zweiten Konverter (127) umfassten zweiten Leistungstransistoren (163) zum Konvertieren des Wechselstroms basierend auf der ersten geschätzten Rotorposition (145).
